# EUROPEAN PATENT APPLICATION

(11) **EP 4 614 408 A1**
(43) Date of publication of application: **10.09.2025**
(21) Application number: 25161171.1
(22) Date of filing: 01.03.2025
(51) Int. Cl.: G06Q 10/04

(54) **VISUAL DISCRIMINATOR AND DISCRIMINATION METHOD FOR A COMPONENT**

(30) Priority: 06.03.2024 IT 202400004930
(71) Applicant: VISINTIN, CORRADO, 33082 Azzano Decimo (PN) (IT)
(72) Inventor: VISINTIN, CORRADO, 33082 Azzano Decimo (PN) (IT)
(74) Representative: Citron, Massimiliano

(57) **Abstract**

A method is described for visually distinguishing one or more components during a maintenance operation, comprising the steps of
- providing a set of visual discriminators wherein each discriminator is configured to be attached removably to a component via clamping means, and comprises a distinct visual characteristic distinguishable by the human eye and naked eye,
- distinguishing the component by manually applying a discriminator to the component through said means.

## Description

The invention relates to a visual discriminator, a kit of discriminators, and a discrimination method, in particular for marking tubular components.

In the maintenance of internal combustion engines, taken here as an example, mechanics need to distinguish the various components, e.g. pipes for gas or oil, mechanical parts or pairs of electrical cables that represent the positive and negative pole of power-supply for a certain component. The most common method is to apply numbered and hand-written adhesive notes to the components. Obviously, the preparation and application of the notes is laborious, and, above all, the identification of the components during work is not immediate.

The main object of the present invention is to improve this state of the art.

Another object is to make a visual discriminator, e.g. of a tubular component such as a tube or a cable, easy to build and effective in use.

At least one object is achieved by what is defined in the attached claims, wherein the dependent claims define advantageous variants.

A method is proposed for visually distinguishing one or more components during a maintenance operation (e.g. of an electric motor or internal combustion engine, or of a vehicle), comprising the steps of
- providing a set of visual discriminators wherein each discriminator is configured to be removably attached to a component by clamping means, and comprises a distinct visual characteristic distinguishable by the human eye and the naked eye,
- distinguishing the component by manually applying a discriminator to the component using said means.

The method has many advantages:
- the component can be identified on the fly by an user while working just by looking at it, eliminating the risk of confusing components and increasing maintenance efficiency;
- the clamping means simplify the application of the discriminator, strengthen the tenacity of the discriminator on the component, and make the disengagement of the discriminator from the component quick;
   - the distinct visual characteristic of the discriminators may e.g. display to the user the status of the electrical conductor or tube to which it is applied (e.g. the electrical voltage level, the type of fluid carried by the tube, etc.) and allows the user to correctly maintain the system;
   - the distinct visual characteristic of the discriminators may e.g. help the user to locate a certain component during maintenance among all the others.

In particular, the components are divided into one or more pairs to be distinguished, and the method comprises the steps of
- providing a first set of visual discriminators and a second set of visual discriminators, wherein
   each discriminator is configured as defined above, and
   each discriminator of the first set comprises a distinct visual feature that is replicated uniquely on only one discriminator of the second set,
- and for the members of each pair
   fixing a discriminator of the first set on a component of a pair,
   fixing a discriminator of the second set on the other component of the pair,
   wherein the fixed discriminator of the first set and the fixed discriminator of the second set have the same visual characteristic.

In the case of pairs of discriminators, the above advantages are enhanced because the method allows for an increased level of discrimination of the components, i.e. their partition into distinct pairs.

Since the discriminators of the first set are provided with visual characteristics such that each discriminator of the first set is visually distinguishable from every other discriminator of the first set, and the discriminators of the second set are provided with the same visual characteristics so that there is only one discriminator of the first set with the same visual characteristic as a discriminator of the second set, the naked-eye identification of a pair of components is simple and fast.

In one embodiment,
- two movable parts (e.g. comprised in said means) of the discriminator are relatively moved apart,
- the component is inserted between the two movable parts, and
- the two movable parts are brought relatively closer together to tighten the component and thus fix the discriminator to the component.

Another aspect of the invention relates to a discriminator of a component, comprising:
a first elongated member having a lateral surface with an opening,
a second elongated member which is
   telescopically and slidingly inserted into the first member, and
   equipped with a lateral surface comprising a recess,
the first and second elongated members being configured so as to translate relatively and to be able to position themselves in a first position and a second position,
wherein in the first position the opening and the recess are substantially aligned, and
in the second position the opening and the recess are misaligned so that the component can be clamped between closely spaced edges of the opening and the recess (which constitute clamp-like means).

Another aspect of the invention is the use of one or more visual discriminators as defined herein to visually distinguish one or more components during a maintenance operation (e.g. of an electric motor or internal combustion engine, or of a vehicle).

In a preferred embodiment, the first elongated member and/or the second elongated member are a cylindrical or prismatic shell. Or the second elongated member is a compact piece.

In a preferred embodiment, the first elongated member and/or the second elongated member have a cross-section of round, oval, square, rectangular or polygonal shape.

Preferably the discriminator comprises an elastic member, e.g. a spring, mounted to exert an elastic force on the first elongated member and/or on the second elongated member tending to maintain them in the second position. In particular, the elastic member is mounted between the first elongated member and the second member, more specifically between a bottom of the first elongated member and the bottom of the second elongated member.

In one embodiment, the clamp means comprise two movable parts adapted to
- be moved relatively apart (preferably by manual action),
- receive a component arranged between them, and
- be brought relatively closer to tighten the component.

In one embodiment, the discriminator comprises a light source adapted to emit a colored light corresponding to said visual characteristic.

In one embodiment the discriminator comprises a battery or photovoltaic generator connected to the light source and adapted to energize the latter.

Another aspect of the invention relates to a component identification system or kit, comprising:
a first set composed of at least one discriminator as defined above, and
a second set composed of at least one discriminator as defined above,
wherein each discriminator of the first set comprises its own distinct visual characteristic which is replicated uniquely on only one discriminator of the second set.

In one embodiment, the discriminators of the first set are surface-colored with a color range such that each discriminator of the first set is visually distinguishable from every other discriminator of the first set, and the discriminators of the second set are surface-colored with the same color range, so that there is only one discriminator of the first set with the same color as a discriminator of the second set (so there are pairs of discriminators to correspondingly discriminate pairs of components).

In one embodiment, the discriminators of the first set are surface-marked by a graphic symbol such that each discriminator of the first set is visually distinguishable from every other discriminator of the first set, and the discriminators of the second set are surface-marked by the same graphic symbol, so that there is only one discriminator of the first set with the same graphic symbol as a discriminator of the second set (thus there are pairs of discriminators to correspondingly discriminate pairs of components).

In a preferred embodiment, the component is a tubular or threadlike component, such as an electrical cable and/or a tube.

In a preferred embodiment, said visual characteristic is a surface color of the discriminator.

In a preferred embodiment, said visual characteristic is a graphic symbol, e.g. a number or a symbol, e.g. an alphanumeric symbol.

In one embodiment, said distinct visual characteristic is a color of light emitted by a light source provided in the discriminator.

The following description concerns a preferred embodiment of discriminator, and will highlight further advantages, referring to the attached drawings in which:
- Fig. 1 shows a three-dimensional view of a first member of a discriminator,
- Fig. 2 shows a three-dimensional view of a member of a discriminator,
- Fig. 3 shows a three-dimensional view of the assembled discriminator in a first configuration,
- Fig. 4 shows a three-dimensional view of the assembled discriminator in a second configuration,
- Fig. 5 shows a cross-sectional view of the discriminator along the V-V plane in Fig. 3,
- Fig. 6 shows a kit of discriminators.

A discriminator 50 is configured to distinguish a tubular component, and essentially comprises a telescopic structure formed of a first member 10 and a second member 30 slidably inserted into the first member 10.

The first member 10 is the external one, and comprises a hollow tubular body 12 which
extends longitudinally along an X1 axis,
has a longitudinal cavity 80,
at one end has an opening 14,
at the opposite end has a wall 18 which closes the cavity 80, and
on the lateral surface has an opening in the cavity 80 which forms a recess 17 (e.g. a window or a notch).

The second member 30 is the internal one, and comprises a hollow tubular body 32 which
extends longitudinally along an X2 axis,
at one end has a wall 34 that closes the member 30, and
on the lateral surface has a recess 36, i.e. an opening or a window or notch.

The body 12 and/or the body 32 are e.g. a cylindrical or prismatic shell. The cross-sectional shape of the body 12 and/or the body 32 is e.g. round, oval, square, rectangular or polygonal in general, but is not essential. The body 32 may also be a compact piece.

The second member 30 is installed inside the cavity 80 in a sliding manner (see arrow F), so that the axes X1, X2 are parallel or preferably coincident, and so that the second member 30 can slide relatively with respect to the first member 10 along a direction parallel to the axes X1, X2.

Preferably, the cross-section of the first member 10 is geometrically similar or corresponding or complementary to that of the second member 30, to facilitate stable sliding of the second member 30 in the first member 10.

Preferably, the second member 30 comprises at one end an expanded portion 38 which has radial dimensions greater than the opening 14 and always remains outside the first member 10. The expanded portion 38 prevents excessive insertion of the second member 30 into the first member 10, and forms a comfortable button for the hand of a user who needs to operate the discriminator 50.

The members 10, 30 can translate relatively and position themselves in a first position and a second position.

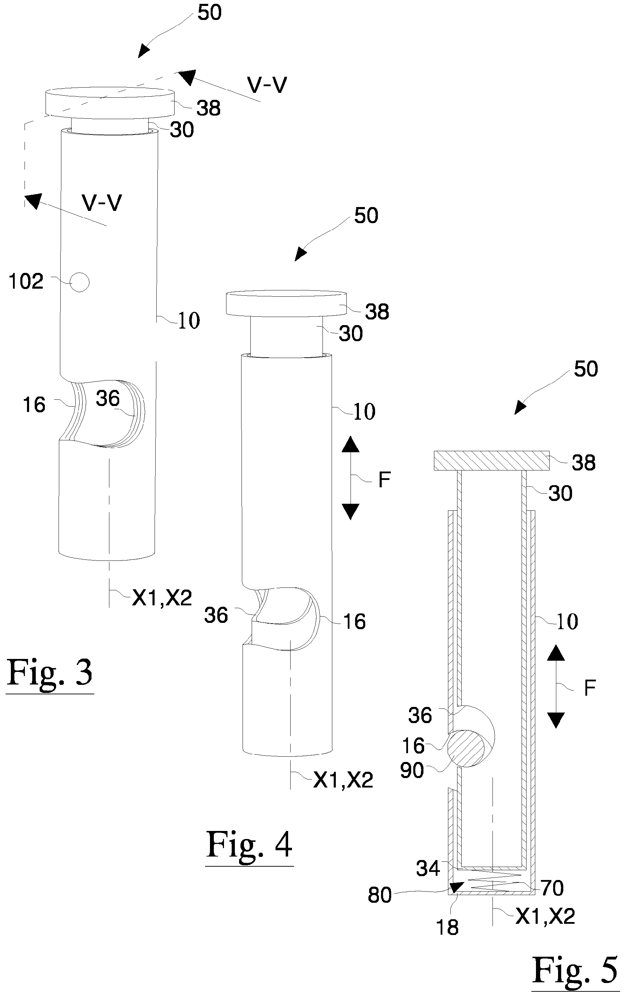

The recesses 17, 36 have approximately the same size and profile, and are positioned along the respective body 12, 32 so that
when the components 10, 30 are in the first position the recesses 17, 36 are substantially aligned (fig. 3), that is, the edges of the recesses 17, 36 are substantially coincident, and
when the components 10, 30 are in the second position the recesses 17, 36 are misaligned (fig. 4).

In the first position the edges of the recesses 17, 36 are aligned and form two maximally-open jaws or clamps, while in the second position such jaws or clamps are more closed and able to "bite" or clamp a tubular component 90 placed inside the recesses 17, 36.

Preferably, the discriminator 50 contains an elastic member 70, e.g. a spring, which is mounted to exert an elastic force on the members 10, 30 and is tending to maintain them in the second position. This prevents dirt from entering the members 10, 30 and - above all - said force is useful for tightening the component 90 between the edges of the recesses 17, 36.

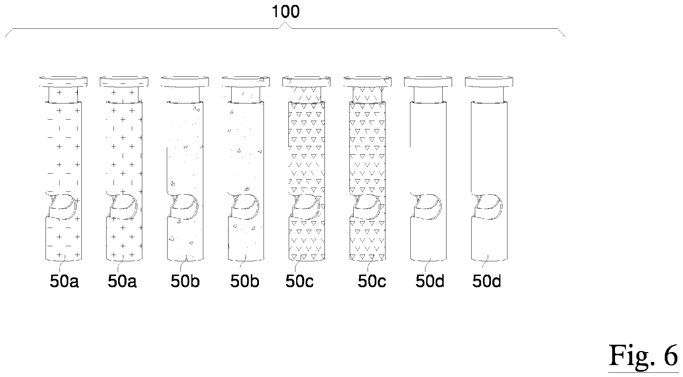

Fig. 6 shows a kit 100 composed of at least one pair of discriminators 50. They are equipped with a visual characteristic (i.e. detectable by the human eye), e.g.
the surface color of the member 30 and/or 50, and/or
the color emitted by an LED 102 mounted in the member 30 and/or 50, and/or
a distinguishing sign, e.g. a number or alphanumeric character (useful for colorblind people).

The visual feature may be
common to, and exclusive to, a pair of discriminators, such as the color, or
exclusive of a single discriminator, e.g. in the case of numbers.

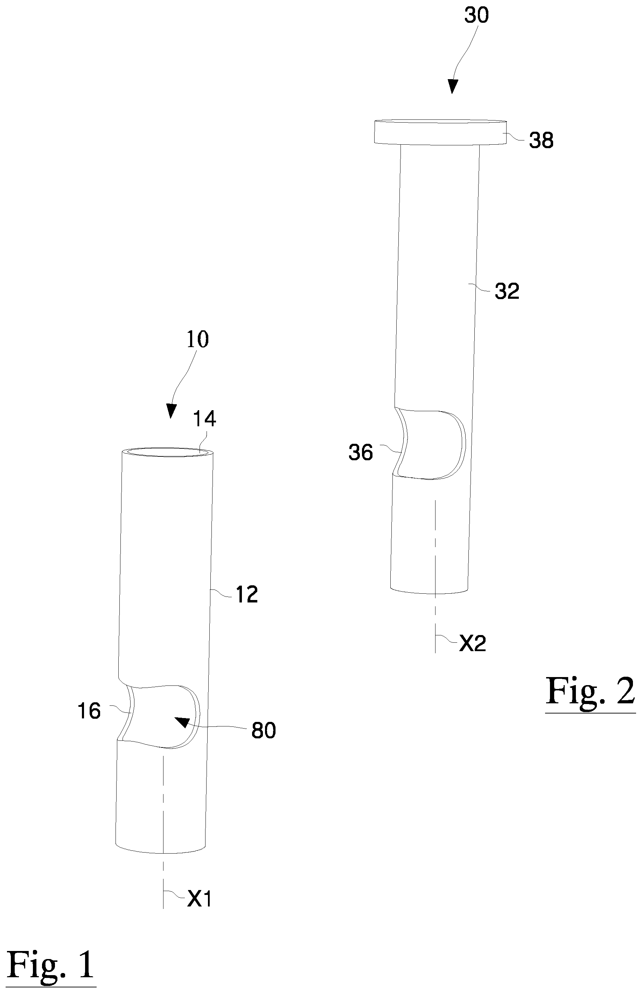

The kit 100 illustrated in fig. 6 is for example made up of eight discriminators 50, structured as described for figures 1-5 and divided into four pairs each having a different visual characteristic as described above.

The discriminators of the first pair are denoted 50a, the discriminators of the second pair are denoted 50b, and so on.

The number of pairs of discriminators 50 in the 100 kit may vary.

In use, to distinguish a first pair of components 90 a user simply applies a discriminator 50a to that pair of components 90, to distinguish a second pair of components 90 the user applies a discriminator 50b to that pair of components 90, and so on. During and after maintenance on the components 90 the user can then easily recognize the pairs of components 90 by visual inspection alone.

The components 90 may be electrical cables, tubes for gas and oil, or other mechanical parts.

## Claims

1. Method for visually distinguishing one or more components during a maintenance operation, comprising the steps of
- providing a set of visual discriminators wherein each discriminator is configured to be attached removably to a component via clamping means, and comprises a distinct visual characteristic distinguishable by the human eye and naked eye,
- distinguishing the component by manually applying a discriminator to the component through said means.

2. Method according to claim 1, wherein the components are divided into one or more pairs to be distinguished, and the method comprises the steps of
- providing a first set of visual discriminators and a second set of visual discriminators, wherein
each discriminator is configured as defined in claim 1, and
each discriminator of the first set comprises a distinct visual feature that is replicated uniquely on only one discriminator of the second set,
- and for the members of each pair, executing the steps of
fixing a discriminator of the first set on a component of a pair,
fixing a discriminator of the second set on the other component of the pair,
wherein the fixed discriminator of the first set and the fixed discriminator of the second set have the same visual characteristic.

3. Method according to claim 1 or 2, with the steps of
moving two movable parts of the discriminator relatively apart,
inserting the component between the two movable parts, and
the two movable parts are brought relatively close together to clamp the component and thus fix the discriminator to the component.

4. Visual discriminator of a component, comprising:
a first elongated member having a lateral surface with an opening,
a second elongated member that is
telescopically and slidingly inserted into the first member, and
equipped with a lateral surface comprising a recess,
the first and second elongated members being configured so as to translate relatively and be able to be positioned in a first position and a second position,
wherein
in the first position the opening and the recess are substantially aligned, and
in the second position the opening and the recess are misaligned so as to be able to clamp the component between brought-closer edges of the opening and the recess.

5. Discriminator according to claim 4, wherein the first elongated member and/or the second elongated member is a cylindrical or prismatic shell.

6. Discriminator according to claim 4 or 5, comprising an elastic member, e.g. a spring, mounted to exert an elastic force on the first elongated member and/or on the second elongated member tending to maintain them in the second position.

7. Method and discriminator according to any preceding claim, wherein the component is a tubular or thread-like component, such as e.g. an electric cable and/or a tube.

8. Method and discriminator according to any preceding claim, wherein said visual characteristic is a surface color of the discriminator.

9. Method and discriminator according to any preceding claim, wherein said visual characteristic is a graphic symbol, e.g. a number or symbol, e.g. alphanumeric.

10. Method and discriminator according to any preceding claim, wherein said distinct visual characteristic is a color of light emitted by a light source provided in the discriminator.
